## Europäisches Patentamt
## European Patent Office
## Office européen des brevets

(19)

(11) Numéro de publication: **0 063 072**
**B1**

(12) # FASCICULE DE BREVET EUROPÉEN

(45) Date de publication du fascicule du brevet:
**23.07.86**

(21) Numéro de dépôt: **82400562.3**

(22) Date de dépôt: **29.03.82**

(51) Int. Cl.⁴: **H 05 B 6/34,** B 22 D 11/10,
H 02 K 1/14

(54) Equipement de lingotière de coulée continue des métaux.

(30) Priorité: **03.04.81 FR 8106909**

(43) Date de publication de la demande:
**20.10.82 Bulletin 82/42**

(45) Mention de la délivrance du brevet:
**23.07.86 Bulletin 86/30**

(84) Etats contractants désignés:
**AT CH DE FR GB IT LI**

(56) Documents cité:
**DE-A-2 834 305**
**FR-A-377 335**
**FR-A-392 201**
**FR-A-1 444 645**
**FR-A-2 312 763**
**FR-A-2 355 392**
**FR-A-2 435 144**
**FR-A-2 442 092**
**US-A-3 610 784**

(73) Titulaire: **ROTELEC, Tour Gan Cédex 13, F-92082
Paris La Defense (FR)**

(72) Inventeur: **Ruer, Jacques, 21, rue du Saut au Loup,
F-78290 Croissy/Seine (FR)**

(74) Mandataire: **Ventavoli, Roger, INSTITUT DE
RECHERCHES DE LA SIDERURGIE FRANCAISE
(IRSID) 185, rue Président Roosevelt, F-78105
Saint- Germain- en- Laye (FR)**

LIBER, STOCKHOLM 1986

EP 0 063 072 B1

**Description**

La présente invention se rapporte au brassage des métaux en fusion, coulés en continu, à l'aide d'un inducteur électromagnétique à champ tournant entourant le produit coulé au niveau d'une lingotière de coulée continue.

Les inducteurs du type considéré sont des appareils statiques polyphasés de forme annulaire pouvant entourer le métal coulé. Ils comportent une culasse magnétique circulaire génèrellement fermée sur elle-même, équipée de masses polaires bobinées, disposées longitudinalement et réparties uniformément sur le pourtour intérieur de la culasse de manière habituellement uniforme, mais parfois également non régulière, comme le montrent, par example, les docments DE—A—2834305, FR—A—377335 et FR—A—392201.

Des inducteurs de ce genre, ainsi que leur application à la coulée continue de l'acier, sont décrits notamment dans les documents FR—A—2.315.344 (IRSID) ou FR—A—2.279.500 (USINOR). Lorsqu'ils sont montés autour du produit coulé, le champ magnétique mobile créé, en tournant autour de l'axe de coulée, entraîne avec lui le métal en fusion dans son mouvement de rotation.

Il est connu que, dans le cas de l'acier notamment, un brassage contrôlé de ce type améliore la qualité des produits obtenus, en particulier en ce qui concerne la structure de solidification.

On sait également que l'on peut améliorer, en plus, la propreté inclusionnaire du métal en faisant agir le champ magnétique tournant suffisamment haut sur la hauteur métallurgique (profondeur du puits de solidification), de façon à pouvoir centrifuger la surface libre (ou ménisque) du métal en lingotière.

On a ainsi été amené à placer l'inducteur déjà au niveau de la lingotière et même dans le corps de celle-ci(adaptée à cet effet) pour assurer son maintien en température par l'eau de refroidissement primaire.

Un tel procédé, au développement industriel duquel a largement contribué le demandeur, est désormais connu du public sous la dénomination protégée "procédé Magnétogyr".

Cette technique est pratiquement d'application générale à toute installation de coulée continue de produits longs (billettes, blooms, . . .).

Un problème peut toutefois apparaître dans le cas de lingotières équipées d'un système de détection du niveau du ménisque par rayonnement gamma (γ) comme c'est le cas, par example, des lingotières decrites dans les documents FR—A—1444645 et FR—A—2312763. On sait que ces systèmes comprennent une source émettrice de rayonnement γ et un récepteur, par, exemple à chambre d'ionisation, entre lesquels passe le métal coulé, ce dernier étant à sa partie supérieure traversé par le faisceau de rayons dont le diamètre sur l'axe de coulée est réglé suffisamment large pour pouvoir intercepter la plage des fluctuations en hauteur de ménisque.

Dans le cas de lingotières équipées d'un tel système de détection, on ne peut généralement pas placer l'inducteur aussi haut que l'on voudrait sur la hauteur métallurgique, car les masses polaires bobinées présentent des têtes de bobines qui dépassent de la culasse et qui (de même que la culasse elle-même), ocnstitueraient un écran pour le rayonnement γ.

Le but de l'invention est de pouvoir réaliser un équipement de lingotière de coulée continue qui allie de façon satisfaisante un système de détection du niveau par rayonnement avec un inducteur de brassage à champ tournant.

Avec cet objectif en vue, l'invention a pour objet un equipement pour la coulée continue des métaux comprenant une lingotière pourvue d'un système de détection de niveau du métal liquide par rayonnement γ, composé d'une source émettrice et d'un récepteur entre lesquels passe le métal coulé équipement caractérisé en ce que la lingotière est équipée d'un inducteur électromagnétique à champ tournant, de type statique, polyphase et de forme annulaire, comprenant une culasse magnétique fermée sur elle-même et pourvue de masses polaires bobinées disposées longitudinalement et réparties sur le pourtour intérieur de la culasse de façon que deux masses polaires voisines au moins présentent entre elles · un écartement supérieur à ceux des autres masses polaires, en ce que la culasse présente une échancrure ménagée sur sa partie située entre lesdites masses polaires les plus écartées, en ce que l'extrémité supérieure da l'inducteur se trouve placée entre la source et le récepteur et en ce que l'inducteur présente d une part une orientation longitudinale telle que l'échancrure apparaisse sur le bord supérieur de la culasse et d'autre part, une orientation angulaire autour de l'axe de la lingotière telle que lesdites masses polaires les plus écartées soient disposées de part et d'autre de l'axe du faisceau γ en regard du récepteur ou de la source.

Comme on le comprend, l'une des caracteristiques de l'invention consiste, par rapport aux inducteurs habituels ayant une répartition uniforme des masses polaires, à re serrer ces dernières au maximum entre elles, moyennant quoi on réalise une nouvelle distribution d'ensemble de masses polaires en forme "d'anneau ouvert", les masses polaires aux extrémités de cet anneau se trouvant ainsi plus espacées l'une de l'autre, ce qui conduit, au niveau de leurs têtes de bobine respectives, à un écartement relativement important qui est mis à profit pour permettre le libre passage du faisceau γ.

Par ailleur, la position en hauteur de l'inducteur peut être telle que le faisceau γ, ou une partie de celui-ci, risque d'être intercepté par la culasse magnétique elle-même. Dans ce cas, il est particulièrement avantageux de prévoir des dispositions complémentaires, telles qu'explicitées précédemment, consistant à ménager sur la culasse une échancrure dont le rôle est de former une "fenêtre" pour permettre le passage du faisceau γ.

L'invention sera bien comprise et d'autres aspects et avantages apparaîtront plus clairement au vu de la description qui suit, donnée en référence aux planches de dessins annexées sur lesquelles:

la figure 1 est une représentation partielle d'un inducteur faisant partie de l'équipement de coulée continue selon l'invention, vu du côté de l'échancrure,

la figure 2 est une vue d'un équipement de coulée continue conforme à l'invention en coupe axiale longitudinale selon le plan A—A de la figure 3.

la figure 3 est une vue du dessus de l'équipement montré sur la figure 2 après enlèvement de la plaque de couverture supérieure.

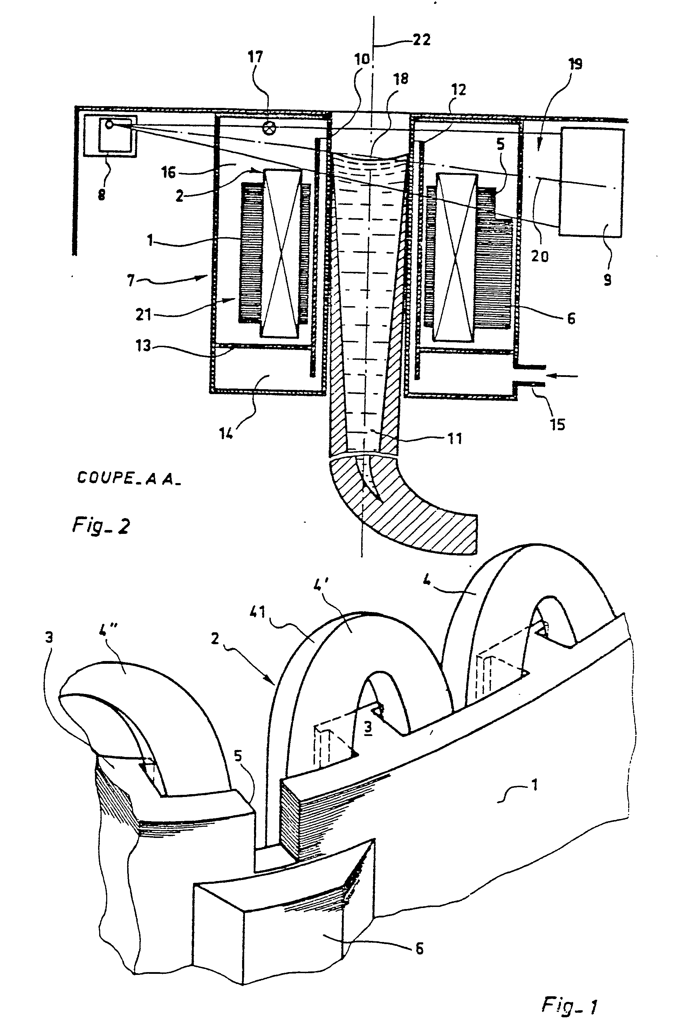

En se reportant d'abord à la figure 1, on voit que l'inducteur comprend une culasse magnétique 1 en tôle feuilletée, sur le pourtour intérieur de laquelle sont réparties des masses polaires longitudinales bobinées 2 constituées chacune d'un pôle magnétique saillant 3 bobiné par un enroulement d'excitation 4 constituant la bobine. Les têtes de bobines, formant des ponts de part et d'autre des extrémités des pôles 3, sont désignés en 41 sur la figure.

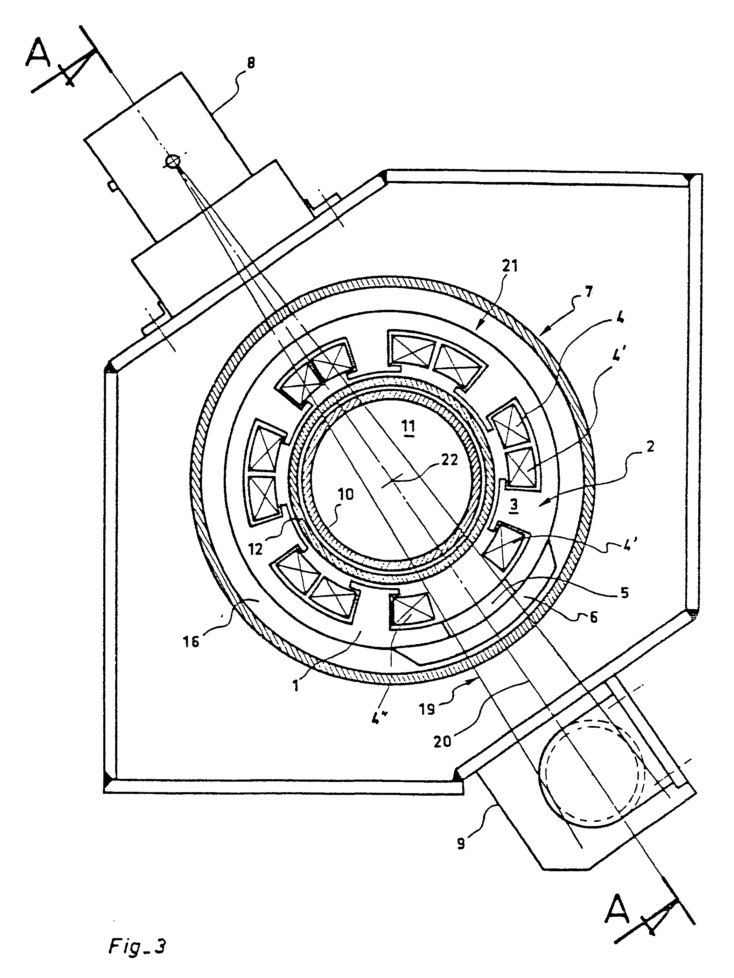

Conformément à l'invention, les masses polaires 2 sont étroitement reserrées entre elles sur le pourtour intérieur de la culasse. Leur configuration d'ensemble (bien visible sur la figure 3) se présente ainsi sous la forme d'un anneau ouvert, de sorte que les masses polaires 4' et 4" placées aux extrémités de l'anneau présentent entre elles, un écartement nettement supérieur de celui séparant les autres masses polaires entre elles.

Par ailleur, une échancrure 4 a été ménagée sur le culasse 1 dans sa portion située entre les deux masses polaires écartées 4' et 4".

Avantageusement, un renflement 6 de la culasse est prévu à la suite de l'échancrure 5. Ce renflement a pour objet de compenser les pertes de circuit magnétique occasionnées par l'enlèvement de matière au niveau de l'enchancrure 5, de manière à pouvoir conserver le degré de saturation magnétique que l'on obtiendrait en l'absence de l'échancrure.

Les figures suivantes montrent cet inducteur monté dans une lingotière de coulée continue de l'acier, pourvue d'un système de détection de niveau par rayonnement γ.

On a représenté en 7 la lingotière, en 8 une source quasiponctuelle, émettrice de rayons γ et en 9 un récepteur de rayons constitué par une chambre d'ionisation relativement volumineuse.

Comme on le voit, la lingotière 7 est constituée par un caisson annulaire dont la paroi intérieure en cuivre 10, ou plus généralement en alliage de cuivre, définit un passage pour le métal coulé 11. L'élément 10 est entouré à faible distance par une chemise 12 définissant entre-eux un espace pour une circulation forcée d'eau de refroidissement. Par ailleurs, le volume intérieur du caisson est séparé par un élément d'étanchéité 13 en deux compartiments superposés communiquant entre eux par l'espace précité. Le compartiment 14 (ou chambre inférieure) est pourvu d'une conduite 15 pour l'introduction de l'eau. De même, le compartiment 16 (ou chambre supérieure) présente une ouverture 17 pour l'évacuation de l'eau après passage dans l'espace de refroidissement autour de tube 10. Comme on le voit, un inducteur électromagnétique de brassage à champ tournant référencé 21 est placé dans la chambre à eau supérieure 16, à un niveau suffisamment élevé pour pouvoir agir déjà au niveau du ménisque liquide 18 lequel, sous l'effet de la rotation, prend une forme concave. Par ailleurs, le ménisque est intercepté par le faisceau 19 de rayons γ, délivré par la source 8 et dont l'étendue, au niveau de l'axe 22 de la lingotière est déterminé de façon à couvrir la plage de variations du niveau du mén- sique.

Comme on le voit sur les figures 2 et 3, l'inducteur de brassage 21 doit en premier lieu, être disposé de façon que son échancrure 5 apparaisse sur le bord supérieur de la culasse 1. En second lieu, l'inducteur doit être orienté angu- lairement autour de l'axe 22 de façon que cette échancrure 5 vienne en regard de récepteur 9 et alignée sur la direction moyenne du faisceau, c'est-à-dire sur l'axe émetteur-récepteur représenté en 20. On comprend immédiatement que l'étendue du faisceau, au droit de la portion de la culasse située en regard du récepteur, conditionne à la fois la largeur de l'échancrure et sa profondeur, l'étendue du faisceau en cet endroit étant elle-même fonction de la position relative de la source et de l'émetteur par rapport à la lingotière et de l'angle solide sous lequel la source voit le récepteur.

Bien entendu, les dimensions de l'échancrure dépendent également de la position relative en hauteur de l'inducteur. Celle-ci, comme évoquée précédemment, est déterminiée pour une puissance de brassage donnée, de façon à obtenir un ménisque 18 à profil concave.

Dans l'example représenté sur la figure 2, la position en hauteur de l'inducteur est telle que le faisceau γ à la sortie de la source 8, passe au ras de l'extrémité supérieure de l'inducteur. Si, pour les raisons évoquées précédemment, il s'avérait nécessaire de placer l'inducteur plus haut dans le corps de la lingotière, on serait alors amené, pour éviter que l'inducteur ne fasse obstacle au passage du rayonnement, à mettre en oeuvre un inducteur, conforme à l'invention, présentant, en plus des masses polaires 4' et 4", une autre paire de masses polaires écartées, en regard de la source 8, c'est-à-dire diamétralement opposée à la paire 4' et 4", ainsi que, le cas échéant une seconde échancrure ménagée sur la culasse entre cette paire supplémentaire. Il va de soi que ces dispositions seront réalisées dans les mêmes conditions que la paire 4', 4" et l'échancrure 5. Toutefois, compte-tenu de l'expansion radiale du faisceau γ depuis la source 8 jusqu'au récepteur 9, l'écartement de la paire supplémentaire de même que le dimensionnement de la seconde échancrure resteraient inférieurs à ceux respectivement de la paire 4', 4" et de l'échancrure 5 en regard du récepteur 9.

Il va de soi que l'invention ne saurait se limiter aux exemples décrits en référence aux figures, mais s'étend à toutes variantes ou équivalents dans la mesure où sont respectées les caractéristiques énoncées dans les revendications jointes.

Ainsi, le cas peut se présenter dans lequel le détecteur est de petite dimension, alors que la source émettrice est relativement volumineuse et s'étend longitudinalement. Dans ces conditions, il est clair que c'est au voisinage de la source que le faisceau γ risque d'être perturbé par la présence de l'inducteur. Par conséquent, ce dernier devra être disposé de manière que les deux masses polaires les plus écartées, et éventuellement l'échancrure de la culasse, prennent position en regard de la source.

D'autre part, on pourrait penser que la répartition non-uniforme des masses polaires sur le pourtour interne de la culasse conformément à l'invention soit de nature à provoquer une certaine perturbation dans le mouvement de l'onde flux magnétique tournante. En fait, les modifications structurelles de l'inducteur telles qu'elles viennent d'être décrites demeurent suffisamment limitées pour n'entraîner aucune conséquence notable sur le brassage du métal, ainsi que le montrent les essais effectués.

**Revendications**

1. Equipement pour la coulée continue des métaux comprenant une lingotière (7) pourvue d'un système de détection de niveau du métal liquide par rayonnement γ, composé d'une source émettrice (8) et d'un récepteur (9) entre lesquels passe le métal coulé (11), équipement caractérisé en ce que la lingotière (7) est équipée d'un inducteur électromagnétique à champ tournant, de type statique, polyphase et de forme annulaire, comprenant une culasse magnétique (1) fermée sur elle-même et pourvue de masses polaires bobinées (2) disposées longitudinalement et réparties sur le pourtour intérieur de la culasse de façon que deux masses polaires voisines au moins présentent entre elles un écartement supérieur à ceux des autres masses polaires, en ce que la culasse (1) présente une échancrure (5) ménagée sur sa partie située entre lesdites masses polaires les plus écartées, en ce que l'extrémité supérieure de l'inducteur se trouve placée entre la source (8) et le récepteur (9) et en ce que l'inducteur présente d une part une orientation longitudinale telle que l'échancrure (5) apparaisse sur le bord supérieur de la culasse (1) et d'autre part, une orientation angulaire autour de l'axe (22) de la lingotière telle que lesdites masses polaires les plus écartées soient disposées de part et d'autre de l'axe (20) du faisceau γ en regard du récepteur (9) ou de la source (8).

2. Equipement selon la revendication 1, caractérisé en ce que la culasse magnétique (1) de l'inducteur présente un renflement (6) dans le prolongement longitudinal de l'échancrure (5).

3. Equipement selon les revendications 1 ou 2 caractérisé en ce que l'inducteur comporte deux paires de masses polaires voisines plus écartées que les autres masses polaires, ces deux paires étant diamétralement opposées entre elles, l'une étant disposée en regard du récepteur (9), l'autre étant disposée en regard de la source (8).

**Patentansprüche**

1. Ausstattung zum kontinuierlichen Gießen von Metallen, mit einer Gießform (7), die eine Anordnung zur Messung der Höhe des flüssigen Metalls mittels Gamma-Strahlen aufweist, die sich aus einer Strahlungsquelle (8) und einem Empfänger (9) zusammensetzt, zwischen denen das flüssige Metall (11) fließt, dadurch gekennzeichnet, daß die Gießform (7) mit einem elektromagnetischen, statischen, mehrphasigen und ringförmigen Drehfeldinduktor versehen ist, der ein in sich geschlossenes Magnetjoch (1) aufweist, sowie gewickelte Polstücke (2), die in Längsrichtung angeordnet sind und entlang des Innenumfangs des Jochs derart verteilt sind, daß wenigstens zwei benachbarte Polstücke zwischen sich einen Abstand aufweisen, der größer als diejenigen der anderen Polstücke ist, daß das Joch (1) eine Kerbe (5) aufweist, die an damjenigen Abschnitt vorgesehen ist, der zwischen den Polstücken mit dem größten Abstand voneinander liegt, daß das obere Ende des Induktors zwischen der Quelle (8) und dem Empfänger (9) angeordnet ist und daß der Induktor einerseits eine derartige Längsausrichtung aufweist, daß die Kerbe (5) am oberen Rand des Jochs (1) zu liegen kommt und andererseits eine derartige ringförmige Ausrichtung um die Achse (22) der Gießform aufweist, daß die Polstücke mit dem größten Abstand voneinander beidseits der Achse (20) des Gamma-Strahlenbündels gegenüber dem Empfänger (9) oder der Quelle (8) angeordnet sind.

2. Ausstattung nach Anspruch 1, dadurch gekennzeichnet, daß das Magnetjoch (1) des Induktors eine Verstärkung (6) in der Längsverlangerung der Kerbe (5) aufweist.

3. Ausstattung nach Ansprüchen 1 oder 2, dadurch gekennzeichnet, daß der Induktor zwei Paar benachbarter Polstücke aufweist, die einen größeren Abstand voneinander als die anderen Polstücke aufweisen, wobei diese beiden Paare sich diametral gegenüberliegen und ein Paar gegenüber dem Empfänger (9) und das andere Paar gegenüber der Quelle (8) angeordnet sind.

**Claims**

1. Equipment for continuous casting of metals comprising a mould (7) provided with a system for detecting the level of molten metal by gamma radiation, including an emitting source (8) and a receiver (9) between which the cast metal (11) passes, said equipment being characterized in that the mould (7) is equipped with an electromagnetic static type rotary field inductor which is multiphase and of annular shape, comprising a magnetic yoke (1) closing into itself and provided with coiled polar masses (2) disposed longitudinally and distributed along the inner periphery of the yoke in such a way that two adjacent polar masses at least exhibit therebetween a distance greater than those between the other polar masses, in that the yoke (1) exhibits a recess (5) formed on its part located between said polar masses most widely spaced apart, in that the upper end of the inductor is located between the source (8) and the receiver (9) and in that the inductor exhibits on the one hand a longitudinal orientation such that the recess (5) appears on the upper rim of the yoke (1) and on the other hand an angular orientation about the axis (22) of the mould such that said polar masses spaced most widely apart are disposed on each side of the axis (20) of the gamma bundle opposite the receiver (9) or the source (8).

2. The equipment according to claim 1, characterized in that the magnetic yoke (1) of the inductor exhibits a thick portion (6) in the longitudinal extension of the recess (5).

3. The equipment according to claims 1 or 2, characterized in that the inductor comprises two pairs of adjacent polar masses spaced further apart that the other polar masses, these two pairs being diametrically opposite each other, one being disposed opposite each receiver (9), the other being disposed oppposite the source (8).

0 063 072

COUPE_A A_

Fig_2

Fig_1

Fig. 3